Europäisches Patentamt

European Patent Office

Office européen des brevets

(11) Veröffentlichungsnummer : **0 165 228**
B1

# EUROPÄISCHE PATENTSCHRIFT

(45) Veröffentlichungstag der Patentschrift :
03.01.90

(21) Anmeldenummer : 85890019.4

(22) Anmeldetag : 25.01.85

(51) Int. Cl.⁵ : $C\ 02\ F\ \ 7/00$, $C\ 02\ F\ \ 3/20$

(54) Vorrichtung zum Belüften von strömenden Medien.

(30) Priorität : 30.01.84 AT 285/84

(43) Veröffentlichungstag der Anmeldung :
18.12.85 Patentblatt 85/51

(45) Bekanntmachung des Hinweises auf die Patenter-
teilung : 03.01.90 Patentblatt 90/01

(84) Benannte Vertragsstaaten :
CH DE FR GB IT LI

(56) Entgegenhaltungen :
AT--A-   337 626
DE--A- 1 957 160
DE--A- 2 649 756
NL--A- 7 116 127

(73) Patentinhaber : Hütter, Karl
Froschaugasse 7/6/30
A-8010 Graz (AT)

(72) Erfinder : Hütter, Karl
Froschaugasse 7/6/30
A-8010 Graz (AT)

(74) Vertreter : Müllner, Erwin, Dr.
Patentanwälte Dr. Erwin Müllner Dipl.-Ing. Werner
Katschinka Postfach 159 Weihburggasse 9
A-1010 Wien (AT)

## Beschreibung

Die Erfindung betrifft eine Vorrichtung zum Belüften von strömenden Medien, insbesondere Wasser, mit einem Zuflußrohr, einer Düse, einem Belüftungsstück und einem daran anschließenden Fallrohr. Zur Regenerierung des Wassers von Seen oder Teichen wie auch zur Belüftung von Gülle im landwirtschaftlichen Bereich im Zusammenhang mit Kläranlagen ist es erforderlich, Sauerstoff bzw. ein Gas-Luftgemisch in die genannten strömenden Medien einzutragen, denn ein großer Teil der im Wasser lebenden Organismen ist auf einen ausreichenden Sauerstoffgehalt des Wassers angewiesen. Jede aerobe Lebensgemeinschaft benötigt bestimmte Mindestkonzentritionen an gelöstem Sauerstoff. Reichen die Größen der Grenzflächen Wasser zur Luft und die Turbulenzen an der Wasseroberfläche nicht aus, den erforderlichen Sauerstoffkonzentrationswert herzustellen, dann wird künstliche Belüftung mittels Vorrichtungen der eingangs beschriebenen Art eingesetzt.

Ein bekanntes Gerät des Anmelders, das in der AT-PS 371 373 beschrieben ist umfaßt einen Ansaugteil, ein Belüftungsstück und ein Fallrohr. Der Ansaugteil ist der Form des frei ausströmenden Wasserstrahles nachempfunden. Der Strahl verengt sich nach einer Umlenkung von 75 bzw. 80° und wird durch einen Diffusor mit geringfügiger Querschnittserweiterung geführt. In dem anschließenden Belüftungsstück mit rechteckigem Querschnitt ist eine Seitenwand aus schuppenartig überlappenden, leistenförmigen Lamellen aufgebaut. Es besteht ein freier Zwischenraum zwischen den Lamellen sowie eine Verbindung mit der Umgebungsluft bzw. dem einzutragenden Sauerstoff oder einem anderen Gas. Das im Inneren der Belüftungskammer über die Belüftungslamellen strömende Wasser saugt Luft an, die durch den Wasserstrom in dem anschließenden Fallrohr an den Boden z. B. eines Behälters mit zu belüftendem Wasser geführt wird.

Aus der AT-B 337 626 ist eine Vorrichtung zum Belüften von strömenden Medien, insbesondere Wasser, mit einem Zuflußrohr, einer Düse, einem Belüftungsstück mit im Inneren konzentrisch übereinander und im Abstand zueinander angeordneten dünnwandigen kegelstumpfförmigen Rohrstücken und einem daran anschließenden Fallrohr bekannt. Die Erfindung zielt darauf ab, die Optimierbarkeit und den Wirkungsgrad dieser bekannten vorrichtung zum Belüften von strömenden Medien weiter zu verbessern. Dies wird erfindungsgemäß dadurch erreicht, daß im Inneren des Belüftungsstückes konzentrisch übereinander und im Abstand zueinander dünnwandige kegelstumpfförmige Rohrstücke vorgesehen sind, die im Bereich ihres Basiskreises auf der Innenseite der Gehäusewand des Belüftungsstückes insbesondere auf Ringen montiert oder zwischen Ringen eingespannt sind, die die zylindrische Gehäusewand des Belüftungsstückes bilden und die jeweils Öffnungen als Ansaugschlitze zum Lufteintritt aufweisen. An Stelle der einleitend genannten leistenförmigen Lamellen sind rotationssymmetrische Körper, nämlich die kegelstumpfförmigen Rohrstücke vorgesehen, die einander überlappend so montiert sind, daß sie gewissermaßen ineinander stecken. Das über das ansaugende Zuflußrohr und die Düse durch das Belüftungsstück fließende Wasser nimmt infolge der speziellen Ausbildung des Belüftungsstückes mehr Luft mit, als bekannte Geräte.

Eine besondere Ausführungsform ist dadurch gekennzeichnet, daß die kegelstumpfförmigen Rohrstücke einen hohlen kegelförmigen, koaxialen Einsatz umschließen, dessen Inneres zum Ansaugen von Luft mit der Atmosphäre in Verbindung steht und dessen Mantelfläche Ansaugschlitze aufweist. Dadurch wird der Wirkungsgrad der Vorrichtung noch weiter erhöht, denn es kann auf diese Weise auch der zentrale Kernbereich der Wassersäule unmittelbar belüftet werden. Es ist zweckmäßig, wenn der kegelförmige Einsatz eine stufenförmige Mantelfläche mit Ansaugschlitzen aufweist und wenn gegebenenfalls zylindrische Leitbleche auf den Stufen vorgesehen sind, die die Stufen überragen. In diesem Fall stellt sich der kegelige Einsatz auf den Wasserspiegel selbsttätig ein. Die Eintauchtiefe entspricht dadurch immer der Höhe des kegeligen Einsatzes.

Ausführungsbeispiele des Erfindungsgegenstandes sind in den Zeichnungen dargestellt.

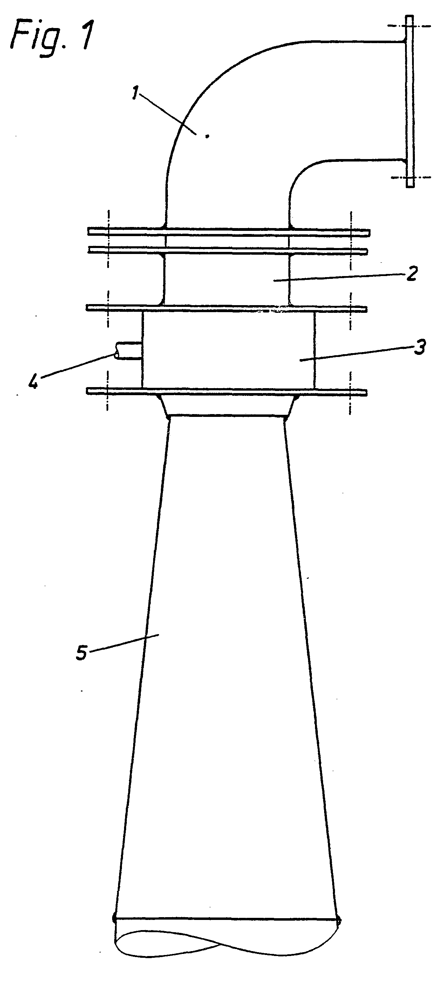

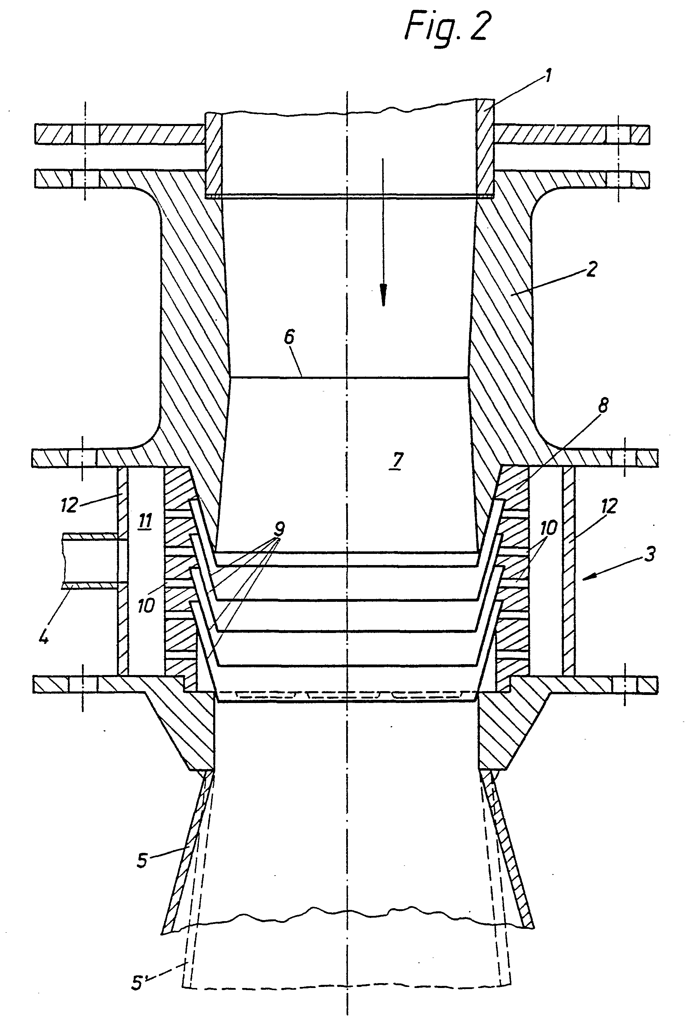

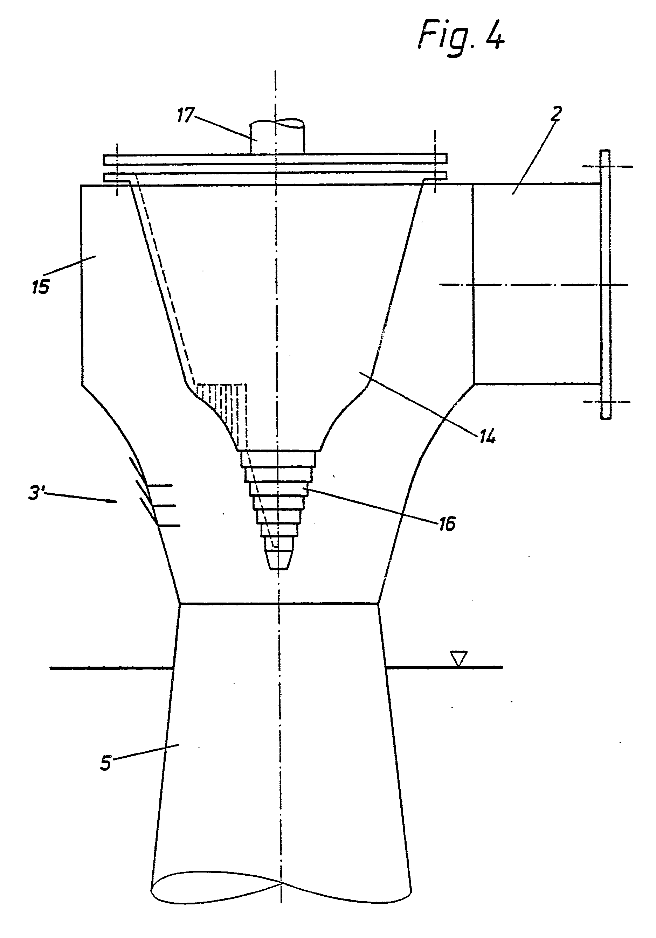

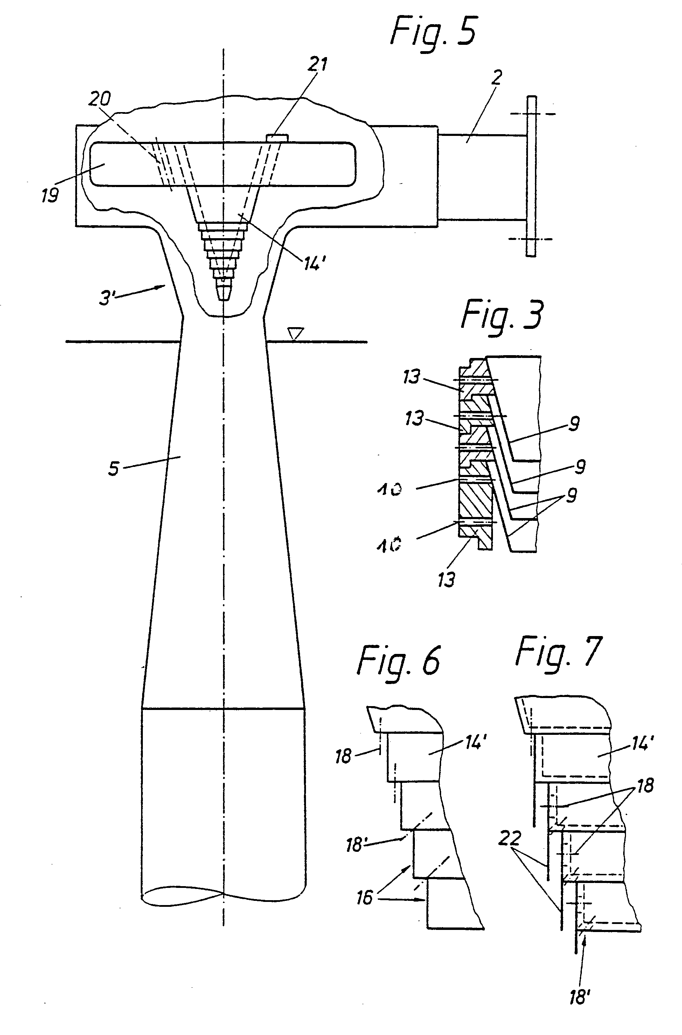

Fig. 1 zeigt eine Vorrichtung gemäß der Erfindung in Ansicht, Fig. 2 die Düse und das Belüftungsstück im Querschnitt, Fig. 3 eine Variation eines Details aus Fig. 2, Fig. 4 eine andere Ausführung eines Belüftungsstückes mit kegelförmigem Einsatz, Fig. 5 eine Variante zu Fig. 4 mit Schwimmereinsatz und die Fig. 6 und 7 Varianten eines Details von Fig. 4 oder 5.

Gemäß Fig. 1 besteht eine Vorrichtung zum Belüften von strömenden Medien entsprechend der Erfindung aus einem mittels einer Pumpe oder auf Grund eines vorhandenen Gefälles mit Wasser od. dgl. beschickten Zuflußrohr 1, dessen Form einen frei ausströmenden Wasserstrahl weitgehend nachgebildet ist, damit die hydrodynamischen Verluste gering gehalten werden können. Daran angeflanscht ist eine Düse 2 (Venturidüse, Diffusordüse). Es folgt ein Belüftungsstück 3, das aus zwei konzentrischen Kammern besteht. In die äußere Kammer mündet eine Luftzuführung 4 ein. Schließlich ist an das Belüftungsstück 3 ein Fallrohr 5 angeschlossen, dessen Querschnitt langsam zunimmt.

Fig. 2 zeigt die Düse 2 und das Belüftungsstück 3 im Querschnitt. In den als Düse 2 ausgebildeten Stutzen mündet das Zuflußrohr 1 ein. Die Düse 2 weist eine Querschnittsverengung 6 sowie einen daran anschließenden, sich konisch verbreiternden Teil 7 auf, der bereits in dis Innere des Belüftungsstückes 3 einmündet. Letzteres besteht nach Fig. 2 aus einer Gehäusewand 8 mit an der Innenseite vorgesehenen sägezahnartigen Konusflächen, die jeweils konzentrisch übereinander und im Abstand zueinander angeordnete dünnwandige kegelförmige Rohrstücke 9 tragen. Unterhalb jedes kegelförmigen Rohrstückes 9 münden Bohrungen 10 der Gehäusewand 8 ein. Die Gehäusewand 8 ist von einem Mantel 12 umgeben, so daß sich eine Kammer 11 bildet in die Luft oder Gas über den Stutzen 4 zugeführt wird. Die Luft verteilt sich in der ringförmigen Kammer 11 und gelangt durch die in Reihen angeordneten Bohrungen in das Innere des Belüftungsstückes 3, sobald dort Wasser fließt und die Sogwirkung des über die kegelförmigen Rohrstücke 9 strömenden Wassers Luft herausreißt.

In manchen Fällen kann auch auf die Kammer 11 verzichtet werden. Es entfällt dann der Mantel 12, so daß die Umgebungsluft unmittelbar durch die Bohrungen 10 eingesaugt werden kann.

An das Belüftungsstück 3 schließt das Fallrohr 5 an. Der Öffnungswinkel des Fallrohres 5 ist auf die Menge der angesaugten Luft abzustimmen (5, 5').

Fig. 3 zeigt eine Ausführungsvariante der Befestigung der kegelförmigen Rohrstücke 9. In diesem Fall besteht die Gehäusewand aus einer Mehrzahl von einzelnen übereinander angeordneten Ringen 13, die durch außen liegende Spannschrauben paketförmig zusammengehalten werden. Jeder Ring 13 hat eine schräge Innenfläche, auf der jeweils ein kegelförmiges Rohrstück 9 sitzt. Jedes kegelstumpfförmige Rohrstück 9 liegt einerseits an der Schrägfläche des einen Ringes 13 seitlich an und wird infolge seines Überstandes von der Stirnfläche des darüber angeordneten Ringes 13 beim Zusammenspannen der Ringe 13 so in axialer Richtung verschoben, daß sich ein Preßsitz zwischen dem kegelstumpfförmigen Rohrstück 9 und dem Ring 13 ergibt. Die kegelstumpfförmigen Rohrstücke 9 werden beim Zusammenspannen der Ringe 13 jeweils zwischen zwei benachbarten Ringen 13 eingeklemmt. In den Ringen 13 sind Bohrungen 10 vorgesehen. Es ergibt sich bei dieser Ausführungsform eine besonders einfache Herstellbarkeit sowie auch die Möglichkeit, durch Ergänzen von Ringen 13 mit Rohrstücken 9 die einzutragende Luftmenge zu vergrößern bzw. bei Entfernen zu verkleinern.

Nicht dargestellt ist eine Ausführungsform, bei der die Ringe mit den kegelstumpfförmigen Rohrstücken einstückig ausgebildet sind. Die mit scharfen Abreißkanten versehenen Schrägflächen der Ringe übernehmen in diesem Fall die Aufgabe der kegelstumpfförmigen Rohrstücke.

Fig. 4 zeigt ein Belüftungsstück 3', dessen Außenwand so aufgebaut ist, wie dies in Fig. 2 oder 3 dargestellt ist, das jedoch im Inneren einen hohlen kegelförmigen koaxialen Einsatz 14 aufweist. Der Einsatz ist an der Deckwand einer Kammer 15 befestigt, die dem Belüftungsstück 3' vorgeschaltet ist und in welche die Düse 2 einmündet.

Der kegelstumpfförmige Einsatz 14 hat eine aus teleskopähnlich aneinanderschließenden Ringen oder Stufen gebildete Mantelfläche 16. Er kann einstückig ausgebildet sein. Das Innere des Einsatzes 14 ist hohl und über eine Leitung bzw. Öffnung 17 mit einer Luftzuführung bzw. mit der Umgebungsluft verbunden. Diese Luft tritt durch Bohrungen 18 bzw. 18', in den ebenen Ringflächen 16 stirnseitig aus (Fig. 6) bzw. wird herausgerissen, wenn Wasser den Kegeleinsatz 14 umströmt.

Es können auch zylindrische dünnwandige Rohrstücke 22 als Wasserleitbleche auf die zylindrische ringförmige Mantelfläche 16 aufgesetzt werden, die die Bohrungen 18, 18' abdecken, wie dies in Fig. 7 dargestellt ist.

Bei Fig. 5 ist der kegelförmige Einsatz 14, dessen Oberfläche im Sinne der bereits beschriebenen Fig. 6 oder 7 ausgebildet, auf einem Schwimmer 19 angeordnet. Der Schwimmer 19 besitzt Öffnungen, damit die Umgebungsluft in das Innere eintreten und infolge der Strömung durch die Bohrungen gemäß Fig. 6 oder 7 abgegeben werden kann. Ferner können im Schwimmer noch Bohrungen 20 vorgesehen sein, die Luft an die Außenfläche des kegelförmigen Einsatzes 14' führen. Diese Bohrungen 20 können durch einen Stoppel 21 verschlossen werden.

In den Fig. 4 und 5 ist lediglich der kegelförmige Einsatz 14, 14' in seinen Einzelheiten dargestellt. Die jeweiligen Außenwände der Belüftungsstücke 3 sind gemäß Fig. 2 bzw. 3 aufgebaut. Aus Gründen der Übersichtlichkeit wurde dies in Fig. 4 und 5 nicht nochmals dargestellt. Die Vorrichtung ist mit verschlechtertem Wirkungsgrad selbstverständlich auch nur mit dem kegelförmigen Einsatz 14, 14' im Belüftungsstück 3 betriebsfähig.

Die erfindungsgemäße Vorrichtung kann etwa bei Kläranlagen mit Belebungsbecken und Absetzbecken in dem Belebungsbecken eingesetzt werden. Das Fallrohr taucht in das Belebungsbecken ein und reicht bis etwa zum Grund desselben. Mittels einer Saugleitung und einer Pumpe wird der erfindungsgemäßen Vorrichtung der Klärschlamm aus dem Belebungsbecken wieder zugeführt, so daß sich ein Regenerationskreislauf bildet.

Die erfindungsgemäße Vorrichtung kann auch zur Tiefenbelüftung von Seen oder Teichen herangezogen werden.

**Patentansprüche**

1. Vorrichtung zum Belüften von strömenden Medien, insbesondere Wasser mit einem Zuflußrohr einer Düse, einem Belüftungsstück mit im Inneren konzentrisch übereinander und im Abstand zueinander angeordneten dünnwandigen kegelstumpfförmigen Rohrstücken und einem daran anschließenden Fallrohr, dadurch gekennzeichnet, daß die kegelstumpfförmigen Rohrstücke (9) im Bereich ihres Basiskreises auf der Innenseite der Gehäusewand des Belüftungsstückes (3) auf Ringen (13) montiert oder zwischen Ringen (13) eingespannt sind, die die zylindrische Gehäusewand (8) des Belüftungsstückes (3) bilden und die jeweils Öffnungen (Bohrungen 10) als Ansaugschlitze zum Lufteintritt aufweisen.

2. Vorrichtung nach Anspruch 1, dadurch gekennzeichnet, daß die kegelstumpfförmigen Rohrstücke (9) einen hohlen kegelförmigen, koaxialen Einsatz (14, 14') umschließen, dessen Inneres zum Ansaugen von Luft mit der Atmosphäre in Verbindung steht und dessen Mantelfläche Ansaugschlitze (18, 18') aufweist.

3. Vorrichtung nach Anspruch 2, dadurch gekennzeichnet, daß der kegelförmige Einsatz eine stufenförmige Mantelfläche mit Ansaugschlitzen (18, 18') aufweist und daß gegebenenfalls zylindrische Leitbleche (22) auf den Stufen vorgesehen sind, die die Stufen überragen.

4. Vorrichtung nach den Ansprüchen 2 oder 3, dadurch gekennzeichnet, daß der kegelige Einsatz (14, 14') auf einem oberhalb der kegelstumpfförmigen Rohrstücke (9) angeordneten Schwimmer (19) befestigt ist.

## Claims

1. A device for aerating flowing media, in particular water, having a feed pipe, a nozzle, an aerating section with thin-walled frustoconical pipe sections arranged concentrically one above the other therein and spaced from one another and a down pipe post-connected thereto, characterised in the frustoconical pipe sections (9) in the region of their base circles on the inner side of the housing wall of the aerating section (3), are mounted on rings (13), or clamped between rings (13), which rings form the cylindrical housing wall (8) of the aerating section (3) and each have openings (bores 10) as suction intake slots for the entry of air.

2. A device according to claim 1, characterised in that the frustoconical pipe sections (9) enclose a hollow, frustoconical, co-axial insert (14, 14') of which the inside is in communication with the atmosphere for sucking in air and of which the outer surface comprises suction intake slots (18, 18').

3. A device according to claim 2, characterised in that the conical insert has a stepped outer surface with suction intake slots (18, 18') and that if appropriate there are arranged on the steps cylindrical guide plates (22) which extend beyond the steps.

4. A device according to claims 2 or 3 characterised in that the conical insert (14, 14') is secured to a float (19) arranged above the frustoconical pipe sections (9).

## Revendications

1. Dispositif d'aération de milieux en écoulement, en particulier de l'eau, comprenant un tube d'amenée, une buse, un organe d'aération présentant des pièces tubulaires tronconiques, à parois minces et disposées les unes au-dessus des autres, à l'intérieur, concentriquement et à distance réciproque, et un tube de sortie s'y raccordant, caractérisé en ce que les pièces tubulaires (9) tronconiques sont montées, dans la zone de leur cercle de base sur la face intérieure de la paroi de carter de l'organe d'aération (3), sur des bagues (13) ou serrées entre des bagues (13) qui forment la paroi de carter cylindrique (8) de l'organe d'aération (3) et présentant chacune des orifices (perçages 10) servant de fentes d'aspiration d'air.

2. Dispositif selon la revendication 1, caractérisé en ce que les pièces tubulaires (9) tronconiques entourent un insert coaxial conique creux (14, 14'), dont l'intérieur est relié à l'atmosphère dans le but d'aspirer de l'air et dont la surface enveloppe présente des fentes d'aspirations (18, 18').

3. Dispositif selon la revendication 2, caractérisé en ce que l'insert de forme conique présente une surface enveloppe de forme étagée et comprenant des fentes d'aspirations (18, 18') et en ce que, le cas échéant, des tôles de guidage (22) cylindriques sont prévues sur les étages et dépassent leur niveau.

4. Dispositif selon les revendications 2 ou 3, caractérisé en ce que l'insert conique (14, 14') est fixé sur un flotteur (19) qui est disposé au-dessus des pièces tubulaires tronconiques (9).

*Fig. 1*

*Fig. 2*

Fig. 4

Fig. 5

Fig. 3

Fig. 6

Fig. 7

4